# EUROPEAN PATENT SPECIFICATION

(11) **EP 1 285 569 B1**
(45) Date of publication and mention of the grant of the patent: **08.03.2006**
(21) Application number: 01203014.4
(22) Date of filing: 08.08.2001
(51) Int. Cl.: A01D 34/71, A01D 51/00

(54) **Mowed grass loading device for a self-propelled lawnmower**
Grasladevorrichtung für einen selbstfahrenden Rasenmäher
Dispositif de chargement de l'herbe fauchée pour une tondeuse à gazon autotractée

(43) Date of publication of application: 26.02.2003
(73) Proprietor: BCS S.p.A., 20123 Milan (IT)
(72) Inventor: Castoldi, Luigi, 20081 Abbiategrasso (Milan) (IT)
(74) Representative: De Gregori, Antonella

(56) References cited:
- EP-A- 1 135 981
- DE-A- 3 318 735
- US-A- 3 397 681
- US-A- 4 878 802

## Description

The present invention relates to a mowed grass loading device for a self-propelled lawnmower. Such a device, according to the preamble of claim 1, is known from document US-A-4878802. Currently, beside the mowers of the traditional type for use in agriculture, that are provided along with the sharp blades, only with a sitting unit for the operator, the use is more and more widespread of lawnmowers that are equipped with a suitable body and wherein the grassbox is connected to the chassis.

In these known machines, next to the group of blades for grass sharpening, a suitable mowed grass suction box is associated, which is in turn connected to a suction fan.

In order to operate, such machines require a high power suction group, with ensuing considerable expenses for its provision and assembly; further on, such group is relatively cumbersome and takes up considerable room.

Moreover, these known machines are unable to suck in a proper way all the grass mowed by the blade unit, since the mowed grass can bridge and pile up in particular areas, just because of the abrupt suction action.

Above all, it shall also be noted that, when the machine produces in cutting rather short grass this short and fine mowed grass is not easy to be sucked by the fans provided onto the lawnmower. In this case, by sucking with no load, the engine group can strain thus causing an irremediable damage.

Further on, the abruptly sucked grass piles up onto the walls of the suction ducts, in particular next to areas where the changes of direction take place, thus forming material build-ups which decrease the machine performance or even hinder the correct operation thereof.

A further drawback which is found in this type of machine is that of the formation of build-ups next to the collecting box for the mowed grass, i.e. the grassbox, which the lawnmower is equipped with.

In fact, the mowed and sucked grass always tends to end up in the areas where the suction fan carries out its action with the greatest intensity, so that within a short time a grassbox is saturated as far as its sucking capacity is concerned. On the contrary, a check of its conditions shows that the mowed grass lays almost entirely onto the same place, in a limited area within the grassbox. Accordingly, the mowed grass does not fill completely and homogeneously the grassbox.

Purpose of the present invention is that of realising a mowed grass loading device for a self-propelled lawn mower which solves all the drawbacks connected to the mowed grass removal through suction.

A further purpose is that of realising a device that allows the optimisation of the mowed grass loading into the dedicated grassbox, allowing the grassbox inner room to be exploited at most.

These purposes according to the present invention are achieved by realising a mowed grass loading device according to claim 1.

The features and advantages of a mowed grass loading device for a self-propelled lawn mower according to the present invention will become more evident from the following description with reference to the schematic attached drawings, wherein:
- figure 1 is a perspective view of a self-propelled lawn mower with operator's seat provided with a grass picking up device according to the present invention,
- figure 2 is a schematic side elevation view only of the inner part of device according to the present invention,
- figure 3 is a enlarged partially sectioned, side view of the application of a comb included in the inner part of the device of figure 2, and
- figure 4 is a plan view from above of a portion of the inner part of the device shown in figure 2.

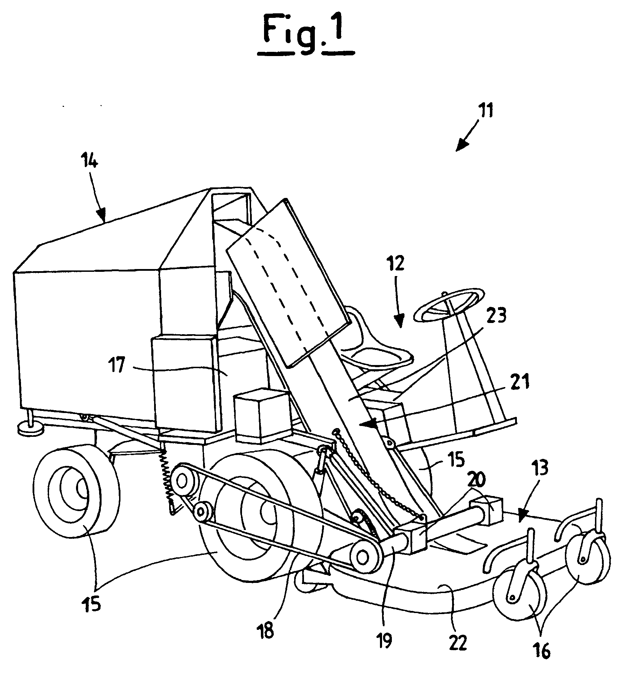

With reference to figure 1 a self-propelled lawn mower is shown, which is indicated in its whole with numeral 11 and is equipped with a side operator's seat 12, a front cutting group 13, and a rear grassbox 14 for the mowed grass.

The lawnmower 11 is provided with four wheels 15; in the example two further small wheels 16 are foreseen that cooperate to move the cutting group 13, carried cantilevered with respect to the machine chassis 17. It shall be noted that a belt transmission 18 provides for moving the cutting group 13 through a shaft 19 and two bevel gear sets 20.

In such lawnmower a mowed grass loading device is foreseen, indicated in its whole with numeral 21, which is realised and arranged according to the present invention.

In particular, such device 21 is arranged between the casing 22, included in the cutting group 13 and the rear grassbox 14. In the example, said device is arranged tilted and goes through the central part of the chassis 17 of the machine along the side operator' s seat 12.

The device 21 substantially comprises a duct 23, which is connected in its lower part to the casing 22 of the cutting group 13 and is introduced, at least partially, in its upper part into the grassbox 14 for the mowed grass.

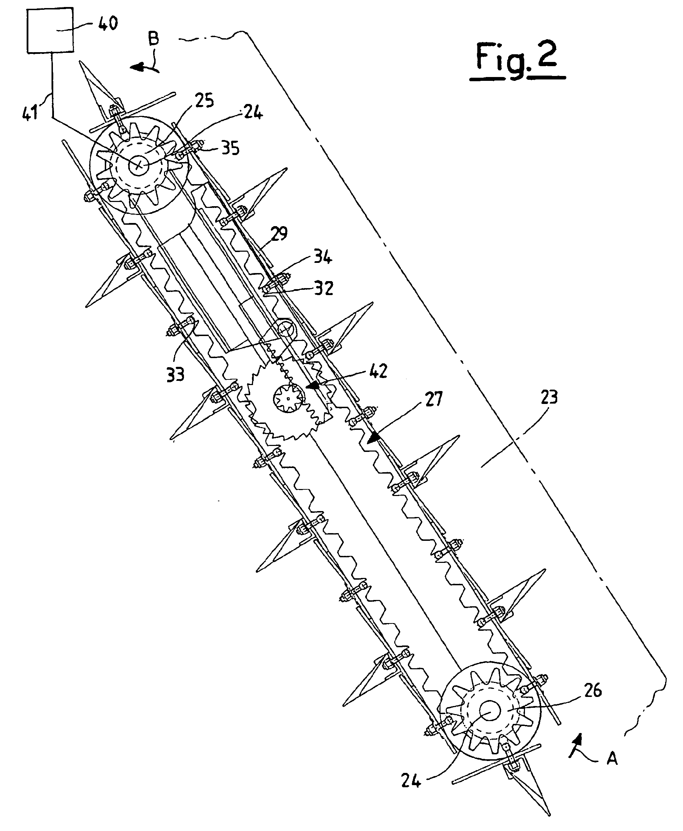

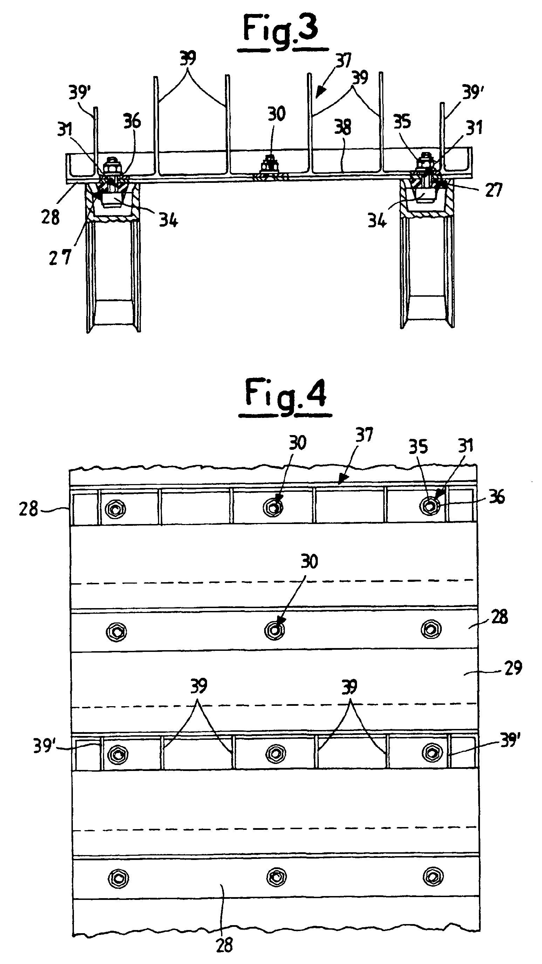

In the box-shaped duct 23, only partially shown in figure 2, there are foreseen two end shafts 24, at whose ends two pairs of wheels or upper and lower toothed pulleys 25, 26 are connected, as partially shown also in figure 3.

A pair of toothed belts 27 are wound as a flattened ring around these pulleys 25 and 26 located at a certain distance the one from the other, in a parallel arrangement, as shown in figure 3.

The upper end shaft 24 is connected through a transmission, schematically shown in 41, to an engine 40, for example of hydraulic type, which sets the rotation of the two toothed pulleys 25, thus causing the two belts 27 to move together with the other integral parts.

In fact, the toothed belts 27 are provided with a plurality of plates and vanes 29 by means of a series of fixing bars 28. In the shown example, it is easily noted that the vanes 29 are of a flatten rectangular shape and are bounded along the main front transversal side, when seen in the direction of rotation, and are actually floating. In fact, the vanes 29 are floating around the fixing area of the respective bar 28.

Along the opposite transversal rear side each vane 29 partially overlaps the following vane 29 in a slightly protruding area thereof, beyond the fixing bar 28, thus producing an overlapped scaled arrangement.

The vanes 29 are bounded to the fixing bar 28 essentially by means of fasteners, such as a central bolt 30, whereas further fasteners, such us two side bolts 31, cooperate to the fixing of the bar 28 onto the toothed belts 27. In fact the toothed belts 27, having a certain number of teeth 32 provided at a predetermined pitch the one from the other, are provided with suitable notches 33, in the example every three teeth. The notches 33 receive transversal pins 34 arranged at the end of the bolt 31 so that the bolt 31 remains integral and fixed to the belt 27, once the nut 35 is screwed and blocked thereon; a respective washer 36 is interposed therein.

In their part facing outwards comb elements 37 are associated to some fixing bars 28, for picking up the mowed grass contained inside the casing 22 and transporting it towards the grassbox 14.

The comb elements 37 as shown in figures 3 and 4 exhibit a flattened base 38 adapted to perfectly associate to the underlying bar 28 and a certain number of tines 39, 39'; centrally located tines 39 are comparatively higher whereas sideways located tines 39' are comparatively smaller. Both centrally and sideways located tines 39, 39' are formed as triangularly shaped foil, arranged transversally with respect to the flattened base 38 and with the straight side facing the movement direction. The comb elements 37 are in general made of moulded plastic material so that, on one end they do not throw spanners in the machine and on the other they can be realised economically.

Generally, the comb elements 37 are arranged on not consecutive bars 28 so that they create a sufficient room for loading and picking up the mowed grass. Moreover, such distance between two comb elements enhances the forced unloading of the single vanes 29 when they reach the upper position and rotate around the pulleys 25.

Finally, there is foreseen a belt tightener unit, indicated in its whole with 42, which keeps the belts 27 and therefore the whole transfer group of the mowed grass so realised, tightened as required.

The operation of a mowed grass loading device for a self-propelled lawnmower according to the present invention is hereinbelow briefly described.

Once the lawnmower is started, the front cutting group 13 acts on the underlying grass, and cuts it. The mowed grass enters the casing 22, whereupon it is grasped by the comb element 37 which is moving thereby, as shown in the lower part of figure 2. Said figure 2 also shows how the vane 29, associated to said comb element 37, during the rotation according to the arrow A around the pulley 24, stays tangential thereto due to the bound formed by the bolts 30 and 31 and by the bar 28. In this arrangement, the vane 29 acts like a pushing element that promotes and cooperates with the mowed grass loading, entraining it into the duct 23.

Then, in the rising central portion of the duct 23, the comb elements 37 entrain the mowed and collected grass upwards, that is to say towards the inlet of the rear grassbox 14 for the mowed grass.

When the vane 29 in re reaches the upper part, as it can be noted in figure 2, it rotates around the upper pulley 25. In this way, as previously described, the vane 29 takes up while rotating an orientation around the pulley 25 according to the arrow B, thus remaining tangential thereto due to the bound formed by the bolts 30 and 31 and by the bar 28.

In doing so the vane 29 throws the mowed grass towards the inner part of the rear grassbox 14 for the mowed grass.

Thus the grass enters inside the grassbox and does not cause any obstruction at the inlet.

The overlap of consecutive vanes in some rear and front areas thereof guarantees that the mowed grass cannot penetrate through them and be trapped as the vanes then separate in correspondence of the pulleys.

Hence, the device according to the present invention allows to resolve all the technical problems exhibited by the known devices of the sucking type.

Of course, modifications will be clear for a man skilled in the art, that, however, will fall within the scope of protection of the present invention.

## Claims

1. Mowed grass loading device for a self-propelled lawn mower that essentially comprises a chassis (17), provided with wheels (15), a front cutting group (13) and a rear grassbox (14) for the mowed grass, said device being foreseen to be placed between said front cutting group (13) and said rear grassbox (14), said device comprising a duct (23), arranged between said front cutting group (13) and said rear grassbox (14), **characterised in that** a pair of belts (27) is arranged for running, in the duct and being arranged as a flattened ring and carrying floating vanes (29) attached in the region of their leading and comb-like members (37).

2. Mowed grass loading device according to claim 1, **characterised in that** said vanes (29) are fastened to said belts (27) by means of bolts (30, 31) in proximity of a single transversal end thereof.

3. Mowed grass loading device according to claim 1 or 2, **characterised in that** said vanes (29) are fastened to said belts (27) by means of fixing bars (28), bound to said belts (27).

4. Mowed grass loading device according to claim 1, **characterised in that** said belts (27) are provided with teeth and are wound onto end pulley (24, 25).

5. Mowed grass loading device according to claim 1, **characterised in that** said vanes (29) are placed within notches (33) of said belts, said notches (33) being formed onto some teeth (32) and receiving fastening members (34).

6. Mowed grass loading device according to claim 5, **characterised in that** said fastening members comprise bolts (31) carrying at a free end thereof transversal pins (34) that can fit into said notches (33) and at the other end receiving a fastening nut (35).

7. Mowed grass loading device according to claim 1, **characterised in that** a rear transversal end of one of said vanes (29) overlaps a front transversal end of a following vane (29) in the direction of motion of said belts (27).

8. Mowed grass loading device according to claim 1, **characterised in that** said comb-like members (37) comprise a respective flattened base (38) adapted to be arranged onto said belts (27) and a certain number of tines (39, 39').

9. Mowed grass loading device according to claim 8, **characterised in that** said tines (39) are higher if located centrally whereas they (39') are smaller if located at the opposite end sides.

10. Mowed grass loading device according to claim 8 or 9, **characterised in that** said tines (39,39') are formed as triangular foils arranged transversally to said flattened base (38) and with the straight side turned towards the direction of motion of said belts (27).

## Patentansprüche

1. Grasladevorrichtung für einen selbstfahrenden Rasenmäher, der im Wesentlichen aufweist ein mit Rädern (15) versehenes Chassis (17), eine vordere Schneidgruppe (13) und einen rückwärtigen Grasbehälter (14) für das gemähte Gras, wobei die Vorrichtung dazu vorgesehen ist, zwischen der vorderen Schneidgruppe (13) und dem rückwärtigen Grasbehälter (14) platziert zu werden, wobei die Vorrichtung einen zwischen der vorderen Schneidgruppe (13) und dem rückwärtigen Grasbehälter (14) angeordneten Kanal (23) aufweist,
**dadurch gekennzeichnet, dass** ein Paar Riemen zum Laufen in dem Kanal angeordnet und als ein abgeflachter Ring angeordnet ist und schwebende Flügel (29), die in dem Bereich ihres vorauseilenden Endes befestigt sind, und kammartige Glieder (37) trägt.

2. Grasladevorrichtung nach Anspruch 1,
**dadurch gekennzeichnet, dass** die Flügel (29) an den Riemen (27) mittels Schrauben (30, 31) in der Nähe eines ihrer einzelnen Querenden befestigt sind.

3. Grasladevorrichtung nach Anspruch 1 oder 2,
**dadurch gekennzeichnet, dass** die Flügel (29) mittels mit den Riemen (27) verbundener Befestigungsschienen (28) an den Riemen (27) befestigt sind.

4. Grasladevorrichtung nach Anspruch 1,
**dadurch gekennzeichnet, dass** die Riemen (27) mit Zähnen versehen und auf eine Riemenscheibe (24, 25) gewickelt sind.

5. Grasladevorrichtung nach Anspruch 1,
**dadurch gekennzeichnet, dass** die Flügel (29) in Kerben (33) der Riemen platziert sind, wobei die Kerben (33) auf einige Zähne (32) geformt sind und Befestigungsglieder (34) aufnehmen.

6. Grasladevorrichtung nach Anspruch 5,
**dadurch gekennzeichnet, dass** die Befestigungsglieder Schrauben (31) umfassen, die an einem freien Ende derselben Querstifte (34) tragen, die in die Kerben (33) zu passen vermögen, und an dem anderen Ende eine Befestigungsmutter (35) aufnehmen.

7. Grasladevorrichtung nach Anspruch 1,
**dadurch gekennzeichnet, dass** ein rückwärtiges Querende eines der Flügel (29) ein vorderes Querende eines folgenden Flügels (29) in der Bewegungsrichtung der Riemen (27) überlappt.

8. Grasladevorrichtung nach Anspruch 1,
**dadurch gekennzeichnet, dass** die kammartigen Glieder (37) jeweils eine abgeflachte Basis (38), die auf den Riemen (27) angeordnet zu werden vermag, und eine gewisse Anzahl Zinken (39, 39') aufweisen.

9. Grasladevorrichtung nach Anspruch 8,
**dadurch gekennzeichnet, dass** die Zinken (39) höher sind, wenn sie zentral angeordnet sind, wohingegen sie (39') kleiner sind, wenn sie an den entgegengesetzten Seitenenden angeordnet sind.

10. Grasladevorrichtung nach Anspruch 8 oder 9,
**dadurch gekennzeichnet, dass** die Zinken (39, 39') als dreieckige Folien ausgebildet sind, die quer zu der abgeflachten Basis (38) und mit der geraden Seite zur Bewegungsrichtung der Riemen (27) gewandt angeordnet sind.

## Revendications

1. Dispositif de chargement d'herbe fauchée destiné à une tondeuse à gazon auto propulsée qui comprend principalement un châssis (17) doté de roues (15), un groupe de coupe avant (13) et un panier à herbe arrière (14) destiné à l'herbe fauchée, ledit dispositif étant prévu pour être placé entre ledit groupe de coupe avant (13) et ledit panier à herbe arrière (14), ledit dispositif comprenant un conduit (23), agencé entre ledit groupe de coupe avant (13) et ledit panier à herbe arrière (14), **caractérisé en ce qu'**une paire de courroies (27) est agencée pour se déplacer dans le conduit, étant agencée sous forme d'un anneau aplati et transportant des ailettes flottantes (29), attachées dans la région de leur partie avant, ainsi que des éléments en forme de peigne (37).

2. Dispositif de chargement d'herbe fauchée selon la revendication 1, **caractérisé en ce que** lesdites ailettes (29) sont fixées sur lesdites courroies (27) au moyen de boulons (30, 31) à proximité d'une seule extrémité transversale de celles-ci.

3. Dispositif de chargement d'herbe fauchée selon la revendication 1 ou 2, **caractérisé en ce que** lesdites ailettes (29) sont fixées sur lesdites courroies (27) au moyen de barres de fixation (28) attachées auxdites courroies (27).

4. Dispositif de chargement d'herbe fauchée selon la revendication 1, **caractérisé en ce que** lesdites courroies (27) sont dotées de dents et sont enroulées sur des poulies d'extrémités (24, 25).

5. Dispositif de chargement d'herbe fauchée selon la revendication 1, **caractérisé en ce que** lesdites ailettes (29) sont placées à l'intérieur d'encoches (33) desdites courroies, lesdites encoches (33) étant formées sur certaines dents (32) et recevant des éléments de fixation (34).

6. Dispositif de chargement d'herbe fauchée selon la revendication 5, **caractérisé en ce que** lesdits éléments de fixation comprennent des boulons (31) portant à leur extrémité libre des broches transversales (34) qui peuvent s'adapter dans lesdites encoches (33), et recevant à l'autre extrémité un écrou de fixation (35).

7. Dispositif de chargement d'herbe fauchée selon la revendication 1, **caractérisé en ce qu'**une extrémité transversale arrière de l'une desdites ailettes (29) chevauche une extrémité transversale avant de l'ailette suivante (29) dans le sens de mouvement desdites courroies (27).

8. Dispositif de chargement d'herbe fauchée selon la revendication 1, **caractérisé en ce que** lesdits éléments en forme de peigne (37) comprennent une base respective aplatie (38) conçue pour être agencée sur lesdites courroies (27) ainsi qu'un certain nombre de pointes (39, 39').

9. Dispositif de chargement d'herbe fauchée selon la revendication 8, **caractérisé en ce que** lesdites pointes (39) sont plus hautes si elles sont situées au centre alors qu'elles (39') sont plus petites si elles sont situées sur les côtés d'extrémités opposées.

10. Dispositif de chargement d'herbe fauchée selon la revendication 8 ou 9, **caractérisé en ce que** lesdites pointes (39, 39') sont façonnées sous forme de feuilles triangulaires agencées transversalement par rapport à ladite base aplatie (38), le côté droit étant tourné vers le sens de mouvement desdites courroies (27).
